# EUROPÄISCHE PATENTSCHRIFT

(11) **EP 2 984 354 B1**
(45) Veröffentlichungstag und Bekanntmachung des Hinweises auf die Patenterteilung: **21.03.2018**
(21) Anmeldenummer: 14714995.9
(22) Anmeldetag: 02.04.2014
(51) Int. Cl.: F16B 13/06

(54) **ANKER**
ANCHOR
SYSTÈME D'ANCRAGE

(30) Priorität: 11.04.2013 DE 102013206387
(43) Veröffentlichungstag der Anmeldung: 17.02.2016
(73) Patentinhaber: Hilti Aktiengesellschaft, 9494 Schaan (LI)
(72) Erfinder: TRAUTWEIN, Bernd, Broken Arrow OK 74012 (US)
(74) Vertreter: Hilti Aktiengesellschaft Corporate Intellectual Property
(86) Internationale Anmeldenummer: PCT/EP2014/056564
(87) Internationale Veröffentlichungsnummer: WO 2014/166784

(56) Entgegenhaltungen:
- CA-A1- 953 958
- DE-A1- 2 256 822

## Beschreibung

Die Erfindung betrifft ein Verfahren zum Setzen eines Ankers, der in einem Bohrloch festlegbar ist, wobei der Anker ausgebildet ist: mit einer Spreizhülse zur Verankerung an einer Wand des Bohrlochs, und mit einem Ankerbolzen, der durch die Spreizhülse durchgeführt ist, und der einen Spreizbereich zum Aufspreizen der Spreizhülse sowie einen Anschlag aufweist, der eine axiale Verschiebung der Spreizhülse vom Spreizbereich hinweg begrenzt, wobei zumindest ein Drehmitnehmer vorgesehen ist, der die Spreizhülse drehfest mit dem Ankerbolzen koppelt, und wobei die Spreizhülse zumindest einen Schneidvorsprung zum Erzeugen eines Hinterschnitts in der Wand des Bohrlochs aufweist, im Bohrloch, bei dem der Anker in das Bohrloch eingeführt wird und mittels des Ankers ein Hinterschnitt im Bohrloch erstellt wird, gemäss dem Oberbegriff des Anspruchs 1.

Bei einem solchen Verfahren wird ein Anker, der in einem Bohrloch festlegbar ist, verwendet, der ausgebildet ist mit einer Spreizhülse zur Verankerung an einer Wand des Bohrlochs, und mit einem Ankerbolzen, der durch die Spreizhülse durchgeführt ist, und der einen Spreizbereich zum Aufspreizen der Spreizhülse sowie einen Anschlag aufweist, der eine axiale Verschiebung der Spreizhülse vom Spreizbereich hinweg begrenzt.

In der Befestigungstechnik im Untergrund Beton unterscheidet man zwischen Einlegeelementen, welche in den Beton eingegossen werden, und nachträglich installierten Dübeln, welche im bereits ausgehärteten Beton verankert werden. Bei den nachträglich installierten Dübeln sind verschiedene Dübeltypen bekannt, z.B. Spreizanker (bekannt beispielsweise aus US5176481A), Schraubanker (bekannt beispielsweise aus DE102010063675A1), chemische Dübelsysteme (bekannt beispielsweise aus US6029417A) und Hinterschnittanker (bekannt beispielsweise aus US6238128B).

Hinterschnittanker verankern sich im Untergrund durch einen Formschluss, was sie besonders geeignet für dynamische Lasten und grosse Rissweiten macht, und relativ hohe Lastwerte bei zentrischem Zug ermöglicht. Zudem bieten Hinterschnittanker ein ähnliches Lasttrageverhalten wie eingelegte Kopfbolzen. Hinterschnittanker gelten aufgrund dieser Eigenschatten als sehr sicher und zuverlässig und werden deshalb häufig für hochsicherheitsrelevante Anwendungen eingesetzt.
Allerdings kann die Installation von Hinterschnittankern relativ komplex und aufwändig sein, da in der Regel spezielles Zubehör für die Installation erforderlich ist, z.B. Bundbohrer, Hinterschnittwerkzeuge und/oder Setzwerkzeuge. Die Kosten für diese Spezialwerkzeuge müssen häufig in die Kosten pro installiertem Befestigungspunkt eingerechnet werden, so dass sich bei Hinterschnittankern häufig höhere Kosten pro installiertem Befestigungspunkt ergeben als bei anderen Dübeln, zum Beispiel bei Bolzenankern. Zudem ist für die Installation eines Hinterschnittankers häufig ein relativ hoher Zeitaufwand erforderlich.
Wegen der häufig vergleichsweise hohen Kosten und der häufig relativ aufwändigen Installation begrenzt sich das Einsatzgebiet gewöhnlich auf die Nische der hochsicherheitsrelevanten Anwendungen oder auf Anwendungen, bei welchen aufgrund erhöhter Anforderungen, z.B. dynamische Lasten oder grosse Rissweiten, andere Ankertypen nicht verwendet werden können.
Die DE 2 256 822 A1 und die CA 953 958 A1 beschreiben Anker mit Verdrehsicherungen zwischen Ankerbolzen und Spreizhülse.
Aufgabe der Erfindung ist es, ein Verfahren zum Setzen eines Ankers anzugeben, der bei hoher Zuverlässigkeit und hohen Lastwerten besonders günstig setzbar und herstellbar ist. Die Aufgabe wird erfindungsgemäss durch ein Verfahren mit den Merkmalen des Anspruchs 1 gelöst. Bevorzugte Ausführungsformen sind in den abhängigen Ansprüchen angegeben.
Ein erfindungsgemässes Verfahren ist dadurch gekennzeichnet, dass die Spreizhülse im Bohrloch über den Ankerbolzen in Drehung versetzt wird und die drehende Spreizhülse im Bohrloch den Hinterschnitt erzeugt.
Bei dem im Verfahren verwendeten Anker ist zumindest ein Drehmitnehmer vorgesehen, der die Spreizhülse drehfest mit dem Ankerbolzen koppelt, wobei die Spreizhülse zumindest einen Schneidvorsprung zum Erzeugen eines Hinterschnitts in der Wand des Bohrlochs aufweist.

Ein Grundgedanke der Erfindung kann in einem Spreizanker gesehen werden, bei dem die Spreizhülse zumindest einen Schneidvorsprung aufweist und drehfest mit dem Ankerbolzen verbunden ist. Damit kann die Spreizhülse im Bohrloch über den Ankerbolzen in Drehung versetzt werden und die drehende Spreizhülse wiederum kann im Bohrloch einen Hinterschnitt erzeugen. Der Anker kann somit eine Doppelfunktion erfüllen. Einerseits kann er wie üblich zur Verankerung im Bohrloch dienen, andererseits kann er aber auch als Hinterschnittbohrer wirken. Somit kann erfindungsgemäss eine besonders zuverlässige Verankerung an einem Hinterschnitt erzielt werden, ohne dass ein zusätzlicher Hinterschnittbohrer erforderlich ist. Es können also erfindungsgemäss besonders hohe Lastwerte erzielt werden, wobei zugleich eine besonders einfache, schnelle und günstige Installation ohne Spezialwerkzeuge möglich ist.

Vorzugsweise bestehen die Spreizhülse und/oder der Ankerbolzen aus einem Metallmaterial. Im Spreizbereich verjüngt sich der Ankerbolzen in Richtung zum Anschlag hin, das heisst im Spreizbereich nimmt der Querschnitt des Ankerbolzens mit zunehmendem Abstand vom Anschlag zu. Im unverspreizten Ausgangszustand befindet sich die Spreizhülse zwischen dem Spreizbereich und dem Anschlag. Im gesetzten Zustand ist der Spreizbereich in die Spreizhülse eingezogen. Der Spreizbereich kann insbesondere zumindest bereichsweise konisch ausgebildet sein.

Soweit hier von der Axialrichtung und der Radialrichtung die Rede ist, kann sich dies insbesondere auf die Längsachse des Ankerbolzens beziehen. Der Drehmitnehmer koppelt die Spreizhülse drehfest, aber axial verschiebbar mit dem Ankerbolzen. Die Drehung des Ankerbolzens und/oder der Spreizhülse erfolgt vorzugsweise um die Längsachse des Ankerbolzens und die drehfeste Kopplung durch den Drehmitnehmer bezieht sich somit vorzugsweise ebenfalls auf eine Drehung um die Längsachse des Ankerbolzens. Für eine besonders zuverlässige Kopplung sind bevorzugt mehrere Drehmitnehmer vorgesehen.
Durch eine axiale Verschiebung der Spreizhülse relativ zum Ankerbolzen kann der Spreizbereich des Ankerbolzens in die Spreizhülse eingezogen und die Spreizhülse dabei zum Erstellen eines Hinterschnitts und zur Verankerung aufgeweitet werden. Besonders bevorzugt ist es, dass der Spreizbereich endnäher am Ankerbolzen angeordnet ist als der Anschlag. Das Bohrloch kann insbesondere in einem Betonsubstrat ausgebildet sein. Die Bohrlochwand, in der der Hinterschnitt erzeugt wird, kann bevorzugt etwa zylindrisch ausgebildet sein.
Besonders vorteilhaft ist es, dass die Spreizhülse zumindest einen Schlitz aufweist. Dies kann die Fertigung vereinfachen. Vorzugsweise können mehrere, bevorzugt parallel verlaufende, Schlitze vorgesehen sein. Hierdurch kann das Spreizverhalten der Hülse verbessert werden. Der zumindest eine Schlitz kann sich insbesondere in Axialrichtung erstrecken und vorzugsweise parallel zur Axialrichtung verlaufen.
Grundsätzlich könnte der Drehmitnehmer an der Spreizhülse ausgebildet sein, beispielsweise als Vorsprung, der in eine Nut im Ankerbolzen eingreift. Besonders bevorzugt ist es aber, dass der Drehmitnehmer ein vom Ankerbolzen vorstehender Vorsprung ist, der in den Schlitz eingreift. Gemäss dieser Ausführungsform kann der Schlitz eine Doppelfunktion übernehmen und sowohl zur Drehkopplung als auch zur Verbesserung des Spreizverhaltens dienen, so dass bei geringem Aufwand eine hohe Funktionalität gegeben ist. Sofern mehrere Schlitze vorhanden sind, kann jedem der Schlitze, aber auch nur einem Teil der Schlitze, ein korrespondierender Vorsprung am Bolzen als Drehmitnehmer zugeordnet sein. Einem einzelnen Schlitz können auch mehrere Vorsprünge am Bolzen als Drehmitnehmer zugeordnet sein.
Der Schneidvorsprung steht an der Aussenseite der Spreizhülse vor. Besonders bevorzugt ist es, dass die Spreizhülse am Schlitz eine Abbiegung aufweist, die den Schneidvorsprung bildet. Dies kann fertigungstechnisch vorteilhaft sein. Die Abbiegung ist vorzugsweise um eine oder mehrere Biegeachsen gebogen, die parallel zur Längsachse des Ankerbolzens verläuft beziehungsweise verlaufen. Sofern mehrere Schlitze vorhanden sind, kann an allen Schlitzen eine Abbiegung als Schneidvorsprung vorhanden sein, oder auch nur an einem Teil der Schlitze.
Besonders bevorzugt ist es, dass der vom Ankerbolzen vorstehende Vorsprung, der den Drehmitnehmer bildet, ein Steg ist. Vorteilhafterweise erstreckt sich der Steg zumindest bereichsweise im Spreizbereich. Hierdurch kann eine besonders zuverlässige und kostengünstige Drehkopplung bereitgestellt werden. Der Steg verläuft geeigneterweise in Axialrichtung. Er kann sich vorzugsweise mit zunehmendem Abstand vom Anschlag aufweiten. Hierdurch kann er das Aufspreizen der Hülse vorteilhaft unterstützen.
Vorteilhaft ist es weiterhin, dass der Ankerbolzen ein Drehangriffsmittel aufweist. Das Drehangriffsmittel ist vorzugsweise ein Mehrkant, insbesondere ein Aussenmehrkant, beispielsweise ein Aussensechskant, oder ein Innenmehrkant. Mittels des Drehangriffsmittels kann ein Setzwerkzeug formschlüssig drehfest an den Ankerbolzen angekoppelt werden. Somit kann ein Drehmoment vom Setzwerkzeug auf den Ankerbolzen übertragen werden und der Ankerbolzen zum Erzeugen des Hinterschnitts in Drehung versetzt werden. Das Drehangriffsmittel kann insbesondere an dem Ende des Ankerbolzens angeordnet sein, welches dem Spreizbereich gegenüberliegt.
Weiterhin ist es bevorzugt, dass der Ankerbolzen ein Aussengewinde aufweist, an dem eine Mutter mit einem zum Aussengewinde korrespondierenden Innengewinde angeordnet ist. Die Mutter kann einerseits in üblicher Art und Weise zum formschlüssigen Festlegen eines Anbauteils am Ankerbolzen dienen. Andererseits kann die Mutter zusammen mit dem Aussengewinde des Ankerbolzens ein Schraubgetriebe bilden, welches eine zum Beispiel am Drehangriffsmittel aufgebrachte Drehung des Ankerbolzens in eine Axialbewegung des Ankerbolzens umsetzt, durch welche wiederum der Spreizbereich in die Spreizhülse eingezogen und die Spreizhülse aufgespreizt werden kann. Das Schraubgetriebe, welches durch die Mutter und das Aussengewinde des Ankerbolzens gebildet wird, kann also eine reine Drehbewegung am Setzwerkzeug in eine kombinierte Dreh- und Axialbewegung am Bolzen umsetzen, welche eine kontinuierliche Hinterschnitterstellung ermöglicht. Somit kann ein besonders einfaches Setzwerkzeug verwendet werden, welches lediglich eine Drehbewegung erzeugen muss, das heisst es ist ein besonders geringer Aufwand beim Setzen erforderlich. Das Setzwerkzeug kann beispielsweise ein Tangentialschlagschrauber sein. Das erfindungsgemässe Verfahren kann einen Spreizanker zur Verfügung stellen, welcher beim Verspreizvorgang selbsttätig einen Hinterschnitt erstellt und damit zum Hinterschnittanker wird. Da die Spreizhülse einen Hinterschnitt in der Bohrlochwand erzeugt, kann sie auch als Schneidhülse bezeichnet werden.

Bei einem erfindungsgemässen Verfahren zum Setzen eines Ankers in einem Bohrloch wird der Anker in das Bohrloch eingeführt und mittels des Ankers ein Hinterschnitt im Bohrloch erstellt.
Die Erfindung wird nachfolgend anhand bevorzugter Ausführungsbeispiele näher erläutert, die schematisch in den beiliegenden Figuren dargestellt sind. In den Figuren zeigen schematisch:
- Figur 1:: eine Seitenansicht eines Beispiels eines Ankers in einem Bohrloch zu Beginn des erfindungsgemässen Verfahrens;

- Figur 2:: eine Querschnittsansicht A-A des Ankers aus Figur 1; und
- Figur 3:: eine Detailansicht von der Seite des Ankers aus Figur 1 im Bereich der Spreizhülse nach Abschluss des Setzvorgangs.

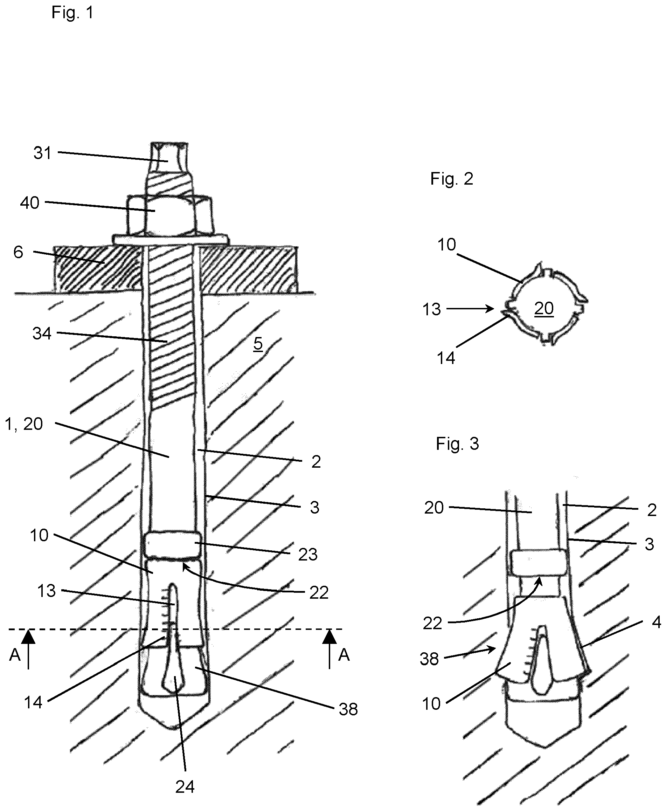

Die Figuren 1 bis 3 zeigen ein Ausführungsbeispiel eines Ankers, in Figuren 1 und 2 zu Beginn des erfindungsgemässen Verfahrens und in Figur 3 nach Abschluss des Setzvorgangs.
Der Anker 1 weist einen Ankerbolzen 20 sowie eine Spreizhülse 10 auf, wobei die Spreizhülse 10 den Ankerbolzen 20 umgibt. An seinem unteren Ende weist der Ankerbolzen 20 einen Spreizbereich 38 auf, in welchem der Querschnitt des Ankerbolzens 20 zum Aufweiten der Spreizhülse 10 nach unten hin kontinuierlich zunimmt. Vorzugsweise kann der Ankerbolzen 20 im Spreizbereich 38 konisch ausgebildet sein. Der Ankerbolzen 20 weist ferner einen Anschlag 22 auf, der eine Axialbewegung der Spreizhülse 10 nach oben, vom Spreizbereich 38 hinweg begrenzt. Der Anschlag 22 ist an einer Ringschulter 23 gebildet, welche den Ankerbolzen 20 umläuft.
An seinem dem Spreizbereich 38 gegenüberliegenden oberen Ende weist der Ankerbolzen 20 ein Drehangriffsmittel 31 auf, welches als Aussensechskant ausgebildet ist. Zwischen dem Drehangriffsmittel 31 und dem Anschlag 22 und/oder der Ringschulter 23 weist der Ankerbolzen ein Aussengewinde 34 auf, auf dem eine Mutter 40 mit korrespondierendem Innengewinde angeordnet ist.

Die Spreizhülse 10 weist mehrere, im dargestellten Ausführungsbeispiel vier, Schlitze 13 auf, welche sich von der Stirnseite der Spreizhülse 10, die dem Spreizbereich 38 zugewandt ist, in die Spreizhülse 10 hinein erstrecken. Zwischen diesen Schlitzen 13 sind vier Spreizlappen gebildet. Die Spreizhülse 10 weist auf ihrer Aussenseite ferner vier Schneidvorsprünge 14 auf. Diese Schneidvorsprünge 14 sind durch Abbiegungen der Spreizhülse 10 gebildet, die längs der Schlitze 13 verlaufen.

Der Ankerbolzen 20 weist vier Drehmitnehmer 24 auf, welche die Spreizhülse 10 drehfest, aber axial verschiebbar, mit dem Ankerbolzen 20 koppeln. Die Drehmitnehmer 24 sind als Stege ausgebildet, wobei jeweils ein Steg in einen der Schlitze 13 der Spreizhülse 10 eingreift. Die in Axialrichtung verlaufenden Stege weiten sich mit zunehmendem Abstand vom Anschlag 22 auf, so dass sie das Aufspreizen der Spreizhülse 10 unterstützen können.

Der Setzvorgang des Ankers ist in den Figuren 1 und 3 illustriert: Zunächst wird der Ankerbolzen 20 durch ein Anbauteil 6 durchgeführt und mit dem Spreizbereich 38 voraus in ein Bohrloch 2 in einem Substrat 5 eingebracht. Der Anschlag 22 verhindert dabei, dass sich die Spreizhülse 10 am Ankerbolzen 20 verschiebt. Der Ankerbolzen 20 wird so tief in das Bohrloch 2 eingeschoben, bis die Mutter 40 das Anbauteil 6 an das Substrat 5 presst. Dieser Zustand ist in Figur 1 dargestellt.

Sodann wird am Drehangriffsmittel 31 ein nicht dargestelltes Setzwerkzeug, zum Beispiel ein Tangentialschlagschrauber, angesetzt, und der Ankerbolzen 20 hiermit in Drehung versetzt. Da zwischen dem Ankerbolzen 20 und der Mutter 40, welche am Anbauteil 6 und somit am Substrat 5 anliegt, ein Schraubgetriebe gebildet ist, führt diese Drehung zu einer Axialbewegung des Ankerbolzens 20, die den Ankerbolzen 20 aus dem Substrat 5 zurückzieht (eventuell muss hierbei die Mutter 40 zum Beispiel mit einem Ring- oder Gabelschlüssel drehfixiert werden). Durch diese Axialbewegung wird der Spreizbereich 38 des Ankerbolzens 20 in die Spreizhülse 10, die im Substrat 5 axial reibschlüssig festliegt, eingezogen, und die Spreizhülse 10 aufgespreizt. Gleichzeitig wird durch die Drehmitnehmer 24 auf dem Ankerbolzen 20 die Spreizhülse 10 mitgedreht. Die Schneidvorsprünge 14 an den Spreizlappen der Spreizhülse 10 werden gegen die Bohrlochwand 3 gedrückt und meisseln durch den tangentialen Schlag Material aus dem Betonsubstrat 5. Dadurch entsteht ein etwa konusförmiger Hinterschnitt 4, in welchem sich die Spreizhülse 10 automatisch formschlüssig verankert. Dieser verankerte Zustand am Ende des Setzvorgangs ist in Figur 3 gezeigt.

## Patentansprüche

1. Verfahren zum Setzen eines Ankers (1), der in einem Bohrloch (2) festlegbar ist, wobei der Anker (1) ausgebildet ist:
- mit einer Spreizhülse (10) zur Verankerung an einer Wand (3) des Bohrlochs (2),
- und mit einem Ankerbolzen (20), der durch die Spreizhülse (10) durchgeführt ist, und der einen Spreizbereich (38) zum Aufspreizen der Spreizhülse (10) sowie einen Anschlag (22) aufweist, der eine axiale Verschiebung der Spreizhülse (10) vom Spreizbereich (38) hinweg begrenzt,
- wobei zumindest ein Drehmitnehmer (24) vorgesehen ist, der die Spreizhülse (10) drehfest mit dem Ankerbolzen (20) koppelt, und
- wobei die Spreizhülse (10) zumindest einen Schneidvorsprung (14) zum Erzeugen eines Hinterschnitts (4) in der Wand (3) des Bohrlochs (2) aufweist,
im Bohrloch (2), bei dem
- der Anker (1) in das Bohrloch (2) eingeführt wird und
- mittels des Ankers (1) ein Hinterschnitt (4) im Bohrloch (2) erstellt wird,
**dadurch gekennzeichnet,**
- **dass** die Spreizhülse (10) im Bohrloch (2) über den Ankerbolzen (20) in Drehung versetzt wird und die drehende Spreizhülse (10) im Bohrloch (2) den Hinterschnitt (4) erzeugt.

2. Verfahren nach Anspruch 1,
**dadurch gekennzeichnet,**
**dass** die Spreizhülse (10) zumindest einen Schlitz (13) aufweist.

3. Verfahren nach Anspruch 2,
**dadurch gekennzeichnet,**
**dass** der Drehmitnehmer (24) ein vom Ankerbolzen (20) vorstehender Vorsprung ist, der in den Schlitz (13) eingreift, und/oder
**dass** die Spreizhülse (10) am Schlitz (13) eine Abbiegung aufweist, die den Schneidvorsprung (14) bildet.

4. Verfahren nach Anspruch 3,
**dadurch gekennzeichnet,**
**dass** der vom Ankerbolzen (20) vorstehende Vorsprung, der den Drehmitnehmer (24) bildet, ein Steg ist.

5. Verfahren nach Anspruch 4,
**dadurch gekennzeichnet,**
**dass** sich der Steg zumindest bereichsweise im Spreizbereich (38) erstreckt, und/oder dass sich der Steg mit zunehmendem Abstand vom Anschlag (22) aufweitet.

6. Verfahren nach einem der vorstehenden Ansprüche,
**dadurch gekennzeichnet,**
**dass** der Ankerbolzen (20) ein Drehangriffsmittel (31), insbesondere einen Aussenmehrkant, aufweist.

7. Verfahren nach einem der vorstehenden Ansprüche,
**dadurch gekennzeichnet,**
**dass** der Ankerbolzen ein Aussengewinde (34) aufweist, an dem eine Mutter (40) mit einem zum Aussengewinde (34) korrespondierenden Innengewinde angeordnet ist.

## Claims

1. Method of setting an anchor (1) that can be fixed in position in a drill hole (2), the anchor (1) being designed with:
- an expansion sleeve (10) for anchoring to a wall (3) of the drill hole (2) and
- an anchor bolt (20) passed through the expansion sleeve (10) and having an expansion region (38) for expanding the expansion sleeve (10), as well as a stop (22) limiting the axial displacement of the expansion sleeve (10) away from the expansion region (38),
- wherein at least one rotary driver (24) is provided and couples the expansion sleeve (10) non-rotatably to the anchor bolt (20) and
- wherein the expansion sleeve (10) has at least one cutting projection (14) for producing an undercut (4) in the wall (3) of the drill hole (2),
in the drill hole (2), in which method
- the anchor (1) is inserted into the drill hole (2) and
- an undercut (4) is produced in the drill hole (2) by means of the anchor (1),
**characterised in that**
- the expansion sleeve (10) is set in rotation in the drill hole (2) via the anchor bolt (20) and the rotating expansion sleeve (10) produces the undercut (4) in the drill hole (2).

2. Method according to claim 1, **characterised in that** the expansion sleeve (10) has at least one slot (13).

3. Method according to claim 2, **characterised in that** the rotary driver (24) is a projection projecting from the anchor bolt (20) and engaging in the slot (13) and/or that the expansion sleeve (10) is provided on the slot (13) with a bent portion forming the cutting projection (14).

4. Method according to claim 3, **characterised in that** the projection projecting from the anchor bolt (20) and forming the rotary driver (24) is a web.

5. Method according to claim 4, **characterised in that** the web extends at least in some areas in the expansion region (38) and/or that the web widens as the distance from the stop (22) increases.

6. Method according to one of the preceding claims, **characterised in that** the anchor bolt (20) has a rotary engagement means (31), in particular an external polygon.

7. Method according to one of the preceding claims, **characterised in that** the anchor bolt has an external thread (34) on which a nut (40) having an internal thread corresponding to the external thread (34) is arranged.

## Revendications

1. Procédé de pose d'un système d'ancrage (1) pouvant être installé dans un trou percé (2), dans lequel le système d'ancrage (1) est formé dans le trou percé (2)avec :
- une douille d'expansion (10) destinée à être ancrée sur une paroi (3) du trou percé (2), et
- un boulon d'ancrage (20) traversant la douille d'expansion (10) et comportant une zone d'expansion (38) pour écarter la douille d'expansion (10) ainsi qu'une butée (22) qui limite un déplacement axial de la douille d'expansion (10) en s'éloignant de la zone d'expansion (38),
- dans lequel est prévu au moins un moyen d'entraînement en rotation (24) qui couple la douille d'expansion (10) au boulon d'ancrage (20) de manière non rotative, et
- dans lequel la douille d'expansion (10) comporte au moins une saillie tranchante (14) pour créer une entaille (4) dans la paroi (3) du trou percé (2),
comportant les étapes consistant à :
- introduire le système d'ancrage (1) dans le trou percé (2) et
- créer une entaille (4) dans le trou percé (2) au moyen du système d'ancrage (1),
**caractérisé en ce que**
- la douille d'expansion (10) est mise en rotation dans le trou percé (2) par l'intermédiaire du boulon d'ancrage (20) et la douille d'expansion en rotation (10) génère l'entaille (4) dans le trou percé (2).

2. Procédé selon la revendication 1,
**caractérisé en ce que**
la douille d'expansion (10) comporte au moins une fente (13).

3. Procédé selon la revendication 2,
**caractérisé en ce que**,
le moyen d'entraînement en rotation (24) est une saillie faisant saillie à partir du boulon d'ancrage (20) qui s'engage dans la fente (13), et/ou
la douille d'expansion (10) présente une courbure sur la fente (13) qui forme la saillie tranchante (14) .

4. Procédé selon la revendication 3,
**caractérisé en ce que**
la saillie faisant saillie à partir du boulon d'ancrage (20) qui forme le moyen d'entraînement en rotation (24) est une nervure.

5. Procédé selon la revendication 4,
**caractérisé en ce que**
la nervure s'étend, au moins dans certaines parties, dans la zone d'expansion (38), et/ou
la nervure s'élargit lorsque la distance par rapport à la butée (22) augmente.

6. Procédé selon l'une des revendications précédentes,
**caractérisé en ce que**
le boulon d'ancrage (20) comporte des moyens d'application d'une rotation (31), en particulier un polygone extérieur.

7. Procédé selon l'une des revendications précédentes,
**caractérisé en ce que**
le boulon d'ancrage comporte un filetage extérieur (34) sur lequel est agencé un écrou (40) avec un filetage intérieur correspondant au filetage extérieur (34) .
